# EUROPÄISCHE PATENTSCHRIFT

(11) **EP 0 362 562 B1**
(45) Veröffentlichungstag und Bekanntmachung des Hinweises auf die Patenterteilung: **15.12.1993**
(21) Anmeldenummer: 89116342.0
(22) Anmeldetag: 05.09.1989
(51) Int. Cl.: G01J 3/28, G01J 3/20, G01J 3/36

(54) **Spektrometer zur gleichzeitigen Intensitätsmessung in verschiedenen Spektralbereichen**
Spectrometer for the simultaneous measurement of intensity in several spectral ranges
Spectromètre pour la mesure simultanée d'intensité en plusieurs domaines spectraux

(30) Priorität: 03.10.1988 DE 3833602
(43) Veröffentlichungstag der Anmeldung: 11.04.1990
(73) Patentinhaber: Fried. Krupp AG Hoesch-Krupp, 45143 Essen (DE)
(72) Erfinder: Carlhoff, Christoph, Dr. Dipl.-Phys., D-4156 Willich 2 (DE); Lorenzen, Claus-Jürgen, Dr. Dipl.-Phys., D-4300 Essen 18 (DE); Nick, Klaus-Peter, Dr. Dipl.-Phys., D-2807 Achim (DE)

(56) Entgegenhaltungen:
- US-A- 3 880 523
- PATENT ABSTRACTS OF JAPAN, Band 10, Nr. 305 (P-507)[2361], 17. Oktober 1986; & JP-A-61 120 023
- PATENT ABSTRACTS OF JAPAN, Band 10, Nr. 229 (P-485), 8. August 1986; & JP-A-61 065 141
- PATENT ABSTRACTS OF JAPAN, Band 12, Nr. 303 (P-746)[3150], 18. August 1988; & JP-A-63 75 523
- REVIEW OF SCIENTIFIC INSTRUMENTS, Band 57, Nr. 8, Teil 2, August 1986, Seiten 1816-1818; R.R. KINDSFATHER et al.: "Two-dimensional Thomson scattering system for ATF"
- N.S.KAPANY: Fiber Optics, Principles and Applications, Academic Press, 1967, Seiten 315-317

## Beschreibung

Die Erfindung bezieht sich auf einen Polychromator in Paschen-Runge-Anordnung zur gleichzeitigen Intensitätsmessung in verschiedenen Spektralbereichen mit einer Photodiodenzeile.

Bei gepulsten Lichtquellen oder bei zeitkritischen Anwendungen soll ein Spektrum im allgemeinen gleichzeitig in verschiedenen Spektralbereichen untersucht werden. Hierfür werden üblicherweise Polychromatoren mit konkaven Gittern in Paschen-Runge-Anordnung verwendet, in denen einstellbare Spalte in Masken angeordnet sind und die Lichtintensität am Ort des Spaltes mit Photodetektoren gemessen wird. Die Photodetektoren messen jeweils die Gesamtintensität. Die Information der spektralen Auflösung in der Umgebung der Spektrallinie am Spalt geht verloren.

Bei komplizierten Spektren können die ausgewählten Spektrallinien durch Linien desselben oder eines anderen Elementes wesentlich gestört werden, außerdem kann die kontinuierliche Strahlung einen nicht zu vernachlässigenden Beitrag zur Gesamtstrahlung liefern. In diesen Fällen kann auf eine Spektralauflösung in der Umgebung der Spektrallinie nicht verzichtet werden, da nur so die Nettolinienintensität der ausgewählten Linie ermittelt werden kann.

Ein einzelner Spektralbereich kann gleichzeitig mit einer Photodiodenzeile mit hoher spektraler und zeitlicher Auflösung und Genauigkeit gemessen werden. Für jeden weiteren Spektralbereich wird jedoch eine zusätzliche Photodiodenzeile benötigt.

In einer Photodiodenzeile sind bis zu 2048 Photodioden im Abstand von 25 µm angeordnet. Diese Dioden messen gleichzeitig die jeweils an ihrem Ort vorhandene Lichtintensität. Auf diese Weise wird die spektrale Intensitätsverteilung eines Spektralbereichs gemessen.

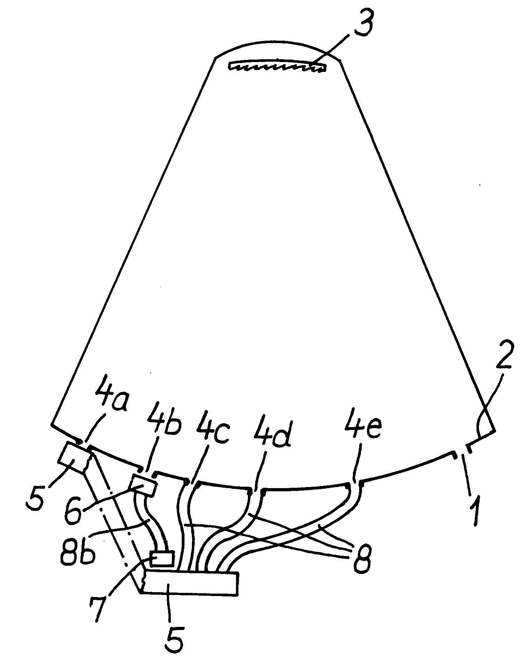

Das Dokument "Patent Abstracts of Japan", Vol. 12, Number 303, (P-746) 3150 , August 18, 1988, beschreibt einen Polychromator zur Messung der spektralen Intensitätsverteilung eines Spektralbereichs unter Einsatz einer Diodenzeile. Dieser ist in Richtung auf den der Abbildung des Spektralbereichs dienenden Rowlandkreis eine Linsenanordnung vorgeschaltet, mittels welcher das vom Rowlandkreis reflektierte Licht an die eben ausgebildete Diodenzeile angepaßt wird. Der bekannte Polychromator enthält keine Einrichtungen, die gleichzeitig die Messung mehrerer verschiedener, auch weit auseinanderliegender Spektralbereiche mittels einer Diodenzeile ermöglichen.

Die Veröffentlichung von N.S. Kapany "Fiber Optics, Principles and Applications", Academic Press, New York/San Francisco/London, 1967, Seiten 315 bis 317, erwähnt zwar die Möglichkeit, das Licht einer einzelnen Spektrallinie in der Spektralebene mittels eines Faserbündels auf einen Detektor zu übertragen. Die damit beschriebene Ausgestaltung ist jedoch nicht in der Lage, gleichzeitig die spektrale Intensitätsverteilung mehrerer verschiedener Spektralbereiche mit einer Photodiodenzeile zu messen.

Der Erfindung liegt die Aufgabe zugrunde, die spektrale Intensitätsverteilung mehrerer verschiedener Spektralbereiche gleichzeitig mit einer Photodiodenzeile zu messen.

Die Aufgabe wird mit einem Polychromator mit den Merkmalen des Anspruchs 1 gelöst, wobei die spektrale Intensitätsverteilung mindestens eines Spektralbereichs auf dem Rowlandkreis jeweils mit einem anderen Abschnitt der Photodiodenzeile, allenfalls jedoch mit einem Teil dieser Abschnitte direkt gemessen und die Intensitätsverteilung zumindest eines weiteren Spektralbereichs auf dem Rowlandkreis jeweils mit einem Bildleiter auf einen anderen Abschnitt übertragen wird. Mit anderen Worten wird die Intensitätsverteilung mindestens zweier Spektralbereiche auf dem Rowlandkreis zum Teil mit Bildleitern übertragen, so daß ggf. auch weit auseinanderliegende Spektralbereiche mit einer Photodiodenzeile gemessen werden können.
Die Photodiodenzeile wird in dem Spektralbereich, in dem Bildleiter nicht geeignet sind, direkt am Rowlandkreis angeordnet, wobei die Übertragung der Intensitätsverteilung der übrigen interessierenden Spektralbereiche mit Bildleitern erfolgt.
Um eine optimale Ausnützung der Lichtintensität auf dem Rowlandkreis zu erreichen, ist jeder aus Einzelfasern bestehende Bildleiter als Querschnittswandler ausgeführt: Seine Einzelfasern sind am Rowlandkreis in einer Matrix mit rechteckigem Querschnitt angeordnet, dessen Höhe der Spalthöhe auf dem Rowlandkreis entspricht. Auf der Seite der Photodiodenzeile ist der Querschnitt jedes Bildleiters dem Querschnitt der Einzeldioden der Photodiodenzeile angepaßt.

Zur Sicherstellung einer optimalen Übertragung der Lichtintensität ist außerdem die numerische Apertur der Einzelfaser zu berücksichtigen, so daß das gesamte Licht eines Bildleiters innerhalb des Akzeptanzwinkels der Photodiode von ihr empfangen werden kann.

Falls der jeweils aus mehreren Einzelfasern bestehende Bildleiter - bedingt durch die Dicke der Einzelfaser am Rowlandkreis - nicht hinreichend dünn gemacht werden kann oder der Querschnitt des Bildleiters an der Photodiodenzeile nicht klein genug bemessen ist, wird die Lichtübertragung vorteilhafterweise durch eine mittels einer Optik erzeugte Zwischenabbildung optimiert (Anspruch 2, 3). Die Zwischenabbildung vergrößert das Bild des Eintrittsspaltes am Rowlandkreis entsprechend dem Querschnitt des Bildleiters und verkleinert dessen Querschnitt an der Photodiodenzeile, so daß das gesamte Licht aus dem Bildleiter vollständig von einer einzigen Photodiode der Photodiodenzeile erfaßt wird. Mit der Zwischenabbildung des Eintrittspalts kann darüber hinaus die Auflösung von Spektralbereich zu Spektralbereich unterschiedlich gewählt und dadurch beispielsweise die Anzahl der benötigten Photodioden optimiert werden.

Mit der Anzahl und der Größe der gewünschten Spektralbereiche steigt die Anzahl der benötigten Photodioden in der Photodiodenzeile, so daß unter Umständen mehrere Photodiodenzeilen benötigt werden. Um eine gleichzeitige Intensitätsmessung aller interessierender Spektralbereiche zu gewährleisten, müssen die Photodiodenzeilen gleichzeitig angesteuert werden.

Die Zeichnung zeigt in schematischer Darstellung ein Ausführungsbeispiel des Erfindungsgegenstandes.

Mit 1 ist der Eintrittsspalt auf dem Rowlandkreis 2 und mit 3 das Beugungsgitter bezeichnet; die Positionsziffern 4a bis 4e beziehen sich auf Spalte auf dem Rowlandkreis für die interessierenden Spektralbereiche. Die Photodiodenzeile 5, die aus zeichentechnischen Gründen in zwei Abschnitten dargestellt ist, befindet sich direkt am Spalt 4a am Rowlandkreis. Die Spektralbereiche an den Spalten 4b bis 4e werden über Bildleiter 8 auf die Photodiodenzeile 5 abgebildet. Der dem Spalt 4b zugeordnete Bildleiter 8b ist mit Optiken 6 und 7 für Zwischenabbildungen versehen, da das Rastermaß des Bildleiters 8b 100 µm beträgt, während der Durchmesser einer Diode in der Photodiodenzeile 25 µm beträgt.

Das zu analysierende Licht tritt am Eintrittsspalt 1 in den Polychromator ein, wird am Gitter 3 gebeugt, so daß das Spektrum auf dem Rowlandkreis 2 abgebildet wird. Der interessierende Spektralbereich 4a wird direkt auf die Photodiodenzeile abgebildet, während die Spektralbereiche in den Spalten 4b bis 4e über Bildleiter 8 auf die Photodiodenzeile übertragen werden.

## Patentansprüche

1. Polychromator in Paschen-Runge-Anordnung zur Intensitätsmessung mit einer Photodiodenzeile (5), **dadurch gekennzeichnet**, daß die spektrale Intensitätsverteilung mindestens eines Spektralbereichs auf dem Rowlandkreis (2) jeweils mit einem anderen Abschnitt der Photodiodenzeile (5), allenfalls jedoch mit einem Teil dieses Abschnitts bzw. dieser Abschnitte, direkt meßbar ist und daß die Intensitätsverteilung zumindest eines weiteren Spektralbereichs auf dem Rowlandkreis (2) jeweils mit einem Bildleiter (8, 8b) jeweils auf einen anderen Abschnitt übertragbar ist, wobei jeder Bildleiter (8, 8b) aus Einzelfasern besteht, die am Rowlandkreis (2) in einer Matrix mit rechteckigem Querschnitt, dessen Höhe der Spalthöhe auf dem Rowlandkreis (2) entspricht, angeordnet sind, und wobei der Querschnitt jedes Bildleiters (8, 8b) auf der Seite der Photodiodenzeile (5) dem Querschnitt der Einzeldioden der Photodiodenzeile (5) angepaßt ist.

2. Polychromator nach Anspruch 1, dadurch gekennzeichnet, daß einem Bildleiter (8b) eine Optik (6) vorgeschaltet ist, mittels welcher der an einem Spalt (4b) des Rowlandkreises (2) vorliegende Spektralbereich auf den Querschnitt des Bildleiters (8b) abbildbar ist.

3. Polychromator nach den vorhergehenden Ansprüchen, dadurch gekennzeichnet, daß der Photodiodenzeile (5) eine Optik (7) für eine Zwischenabbildung des Bildleiter-Querschnitts vorgeschaltet ist.

## Claims

1. Spectrometer in Paschen-Runge arrangement for measurement of intensity with a photodiode strip (5), characterised in that the spectral intensity distribution of at least one spectral range on the Rowland circle (2) may be directly measured with one other section of said photodiode strip (5), but possibly with one part of this section or these sections, and that the intensity distribution of at least one further spectral range on the Rowland circle (2) is transferable to one other section in each case with one image conductor (8, 8b), whereby each image conductor (8, 8b) is composed of single fibres, which are arranged on the Rowland circle (2) in a matrix with a rectangular cross-section, the height of which corresponds to the slit height on the Rowland circle (2), and whereby the cross-section of each image conductor (8, 8b) on the side of the photodiode strip (5) is coordinated to the individual diodes of the photodiode strip (5).

2. Spectrometer according to Claim 1, characterised in that an optical System (6) is connected in series to an image conductor (8b), by means of which an image of the spectral range at a slit (4b) of the Rowland circle (2) may be projected onto the cross-section of the image conductor (8b).

3. Spectrometer according to one of the preceding claims, characterised in that an optical system (7) is connected in series to the photodiode strip (5) to provide an intermediate image of the image conductor cross-section.

## Revendications

1. Spectromètre multiple (Polychromator) dans un montage de Paschen-Runge, pour la mesure d'intensité, avec une ligne de photodiodes (5),
caractérisé en ce que
la répartition d'intensité spectrale d'au moins une zone spectrale sur le cercle de Rowland (2) peut être chaque fois mesurée directement avec une autre section de la ligne de photodiodes (5), mais, tout au plus, avec une partie de cette section ou de ces sections, et en ce que la répartition d'intensité spectrale d'au moins une autre zone spectrale sur le cercle de Rowland (2) peut être chaque fois transmise avec un conducteur optique (8, 8b) chaque fois sur une autre section, étant entendu que chaque conducteur optique (8, 8b) est constitué par des fibres optiques unitaires, qui sont disposées sur le cercle de Rowland (2) dans une matrice à section rectangulaire, dont la hauteur correspond à la hauteur de fente sur le cercle de Rowland (2), et étant entendu que la section de chaque conducteur optique (8, 8b), du côté de la ligne de photodiodes (5), est adaptée à la section des diodes unitaires de la ligne de photodiodes (5).

2. Spectromètre multiple (Polychromator) suivant la revendication 1, caractérisé en ce qu'en amont d'un conducteur optique (8b) est disposée une optique (6), au moyen de laquelle la zone spectrale se présentant devant une fente (4b) du cercle de Rowland (2) peut être reproduite sur la section du conducteur optique (8b).

3. Spectromètre multiple (Polychromator) suivant les revendications précédentes, caractérisé en ce qu'une optique (7) est placée en amont de la ligne de photodiodes (5) pour fournir une image intermédiaire de la section du conducteur optique.
